# EUROPEAN PATENT APPLICATION

(11) **EP 0 654 939 A1**
(43) Date of publication of application: **24.05.1995**
(21) Application number: 94630064.7
(22) Date of filing: 17.11.1994
(51) Int. Cl.: H04N 1/413, H04N 1/417

(54) **Method of data compression and transmission for a facsimile**

(30) Priority: 19.11.1993 KR 9324756
(71) Applicant: GOLDSTAR CO. Ltd., Seoul (KR)
(72) Inventor: Nam, Cha Hee, Youngdungpo-Gu Seoul (KR)
(74) Representative: Waxweiler, Jean

(57) **Abstract**

A data compression and transmission method for a facsimile which can reduce the data transmission time by performing optimum data compression. According to the method, the picture signal data is 1-dimension-compressed and 2-dimension-compressed, each length of the 1-dimension-compressed data and the 2-dimension -compressed data is compared with that of the original data which is not compressed, and as a result of comparison, the data which has the shortest data length is selected and then transmitted.

## Description

### BACKGROUND OF THE INVENTION

### 1. Field of the Invention

The present invention relates to a data compression and transmission method for a facsimile which compresses and transmits picture signal data read out from a picture or a document. More particularly, the present invention relates to a data compression and transmission method for a facsimile which can achieve optimum data compression, and thereby reduce the data transmission time by selectively transmitting one of 1-dimension-compressed data, 2-dimension-compressed data and original data in accordance with the length of the compressed data, and then decoding the transmitted data.

### 2. Description of the Prior Art

According to a conventional facsimile, the picture signal data is compressed and transmitted in accordance with a prescribed specification, regardless of the length of the compressed data.

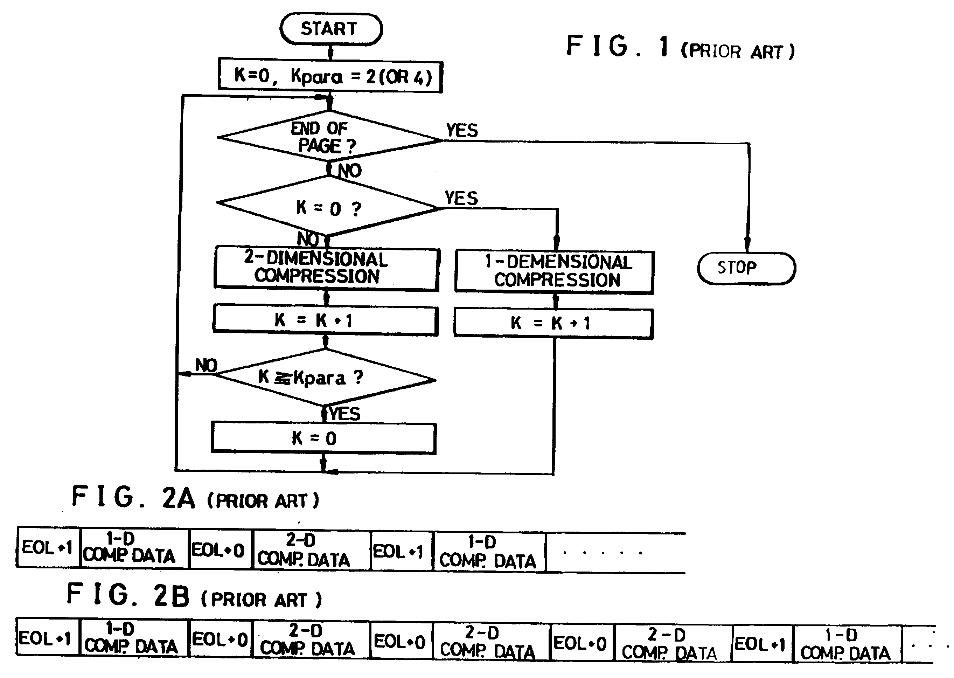

FIG. 1 shows an algorithm explaining a conventional method of data compression and transmission for a facsimile. Referring to the method of FIG. 1, the read-out picture signal data is compressed by a CODEC (coder-decoder) and then transmitted as follows:

First, the value of a register K is set to 'O' and a predetermined value is stored in another register Kpara in accordance with a selected transmission mode. For example, if the transmission mode is a normal mode (3.85 lines per millimeter), '2' is stored in the register Kpara, and if a fine mode (7.7 lines per millimeter), '4' is stored in the register Kpara.

Thereafter, it is determined whether the data of the current line to be compressed is the end of the page to be transmitted. If so, the transmission operation is stopped. If not, the value stored in the register K is checked. At this time, if the value in the register K is '0', 1-dimensional compression of data is performed, '1' is added to the value in the register K, and then it ist again determined whether the current line data is the end of the page to be transmitted.

Meanwhile, if the value in the register K is not '0', 2-dimensional compression of data is performed, '1' is added to the value in the register K, and then the added value in the register K is compared with the value stored in the register Kpara. At this time, if it is determined that K<Kpara as a result of the comparison, it is again determined whether the current line data is the end of the page to be transmitted. If it is determined that K≧Kpara, '0' is stored in the register and then it is again determined whether the current line data is the end of the page to be transmitted.

FIGs. 2A and 2B show the states of data compressed by the conventional data compression and transmission method.

As shown in FIG. 2A, the data for each line is alternately 1-dimension-compressed and 2-dimension-compressed while 'EOL (end of lines)+1' and 'EOL+0' are alternately inserted between each line of the compressed data, in a nornal mode. As shown in FIG. 2B, in a fine mode, one line of data is 1-dimension-compressed and the following three lines of data are 2-dimension-compressed, in repetition. The 1-dimensional compression and the 2-dimensional compression as described above are performed based on the continuity and the repeatability of the picture signal data.

In receiving the picture signal data compressed and transmitted as described above, the received data is decoded in the CODEC and the decoded data is outputted to be printed.

However, the conventional data compression and transmission method for a facsimile has the disadvantage that when the picture signal data has little continuity and repeatability, i.e., when there are large variations between pels of the picture, the length of the compressed data becomes longer than that of the original data, causing the data transmission time to be rather increased. This is due to the fact that the picture signal data is compressed and transmitted according to a prescribed specification regardless of the length of the compressed data.

### SUMMARY OF THE INVENTION

The present invention overcomes the problems involved in the prior art.

It is an object of the present invention to provide a data compression and transmission method for a facsimile which can achieve optimum data compression, and thereby reduce the data transmission time by selectively transmitting one of 1-dimenson-compressed data, two-dimension-compressed data, and original data which is not compressed in accordance with the length of the compressed data and then decoding the transmitted data.

According to the data compression and transmission method of the present invention, the picture signal data to be transmitted is 1-dimension-compressed and 2-dimension-compressed, respectively; each length of the 1-dimension-compressed data and the 2-dimension-compressed data is compared with that of the original data which is not compressed; and the data having the shortest length is selected and transmitted.

### BRIEF DESCRIPTION OF THE DRAWINGS

The above object and other features of the present invention will become more apparent by describing the preferred embodiment thereof with reference to the accompanying drawings, in which:

FIG. 1 is an algorithmic diagram explaining the conventional data compression and transmission method for a facsimile.

FIGs. 2A and 2B are views showing the states of data compressed by the conventional data compression and transmission method.

FIG. 3 is a schematic block diagram of a facsimile to which the data compression and transmission method according to the present invention is applied.

FIG. 4 is an algorithmic diagram explaining the data compression and transmission method according to the present invention.

FIG. 5 is a view showing the state of data compressed by the data compression and transmission method according to the present invention.

FIG. 6 is an algorithmic diagram explaining the decoding of data compressed by the data compression and transmission method according to the present invention.

### DETAILED DESCRIPTION OF THE PREFERRED EMBODIMENT

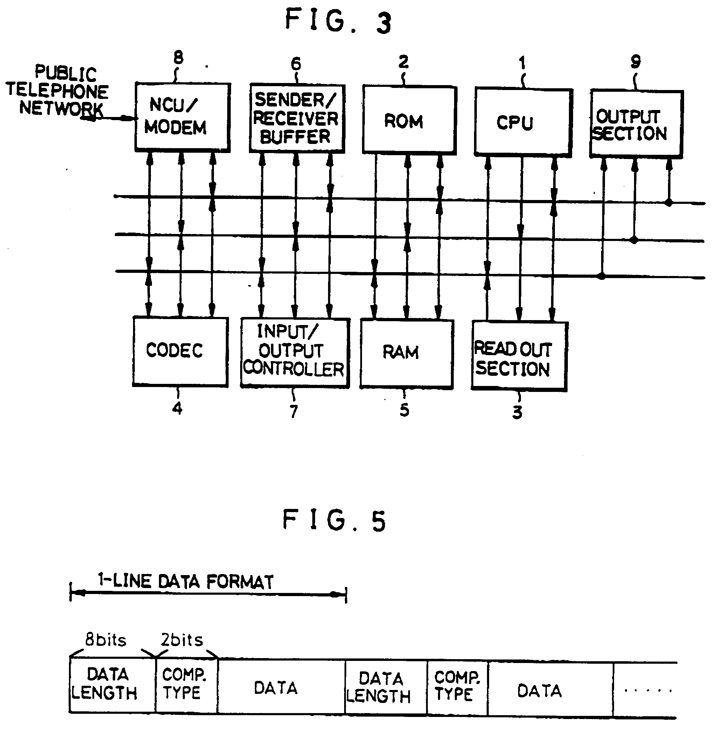

FIG. 3 shows the construction of a facsimile to which the data compression and transmission method according to the present invention is applied.

Referring to FIG. 3, the facsimile is composed of a central processing unit(CPU) 1 for controlling compression and transmission of the picture signal read out from a paper and decoding of the received picture signal, a read only memory(ROM) 2 in which the operation program of the CPU 1 is stored, a read-out section 3 for reading out the picture signal from the paper, a CODEC section 4 for compressing the picture signal read out by the read-out section 3 and decoding the received picture signal, a random access memory(RAM) 5 for formatting the picture signal data compressed by the CODEC section 4 into a transmission format and temporarily storing the received picture signal data for decoding, a sender/receiver buffer 6 for temporarily storing the data to be transmitted and the received data, and an input/output controller 7 for controlling transmission and reception of the data. The facsimile is also provided with a network control unit (NCU)/modem 8 for interfacing transmission and reception of the data stored in the buffer 6 through a public telephone network, and an output section 9 for printing the received data.

The features of the data compression and transmission method according to the present invention, which is applied to the facsimile as constructed above, will now be explained with reference to FIGs. 3 to 5.

The picture signal data is read out from the paper to be transmitted by the read-out section 3 under the control of the CPU 1, and the read-out picture signal data is then compressed by the CODEC section 4.

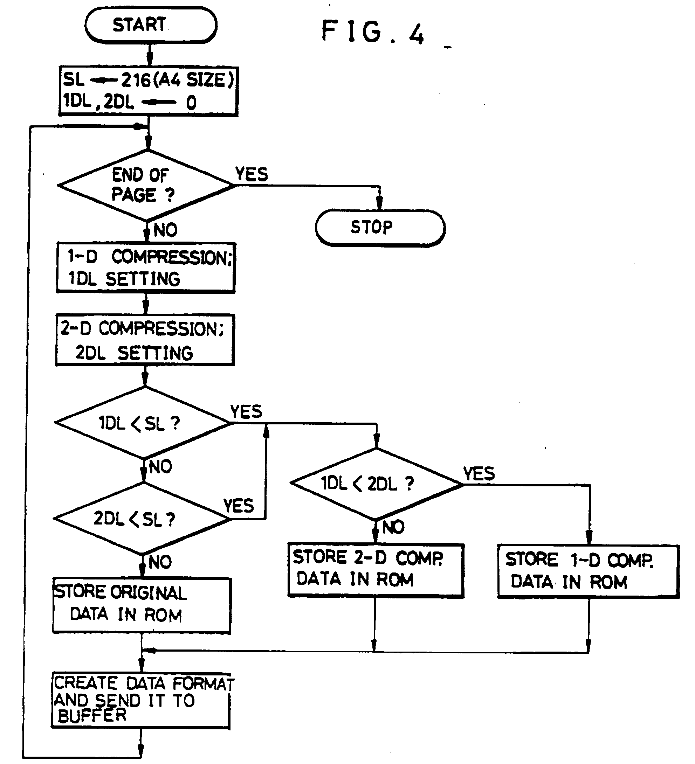

In compressing the picture signal data, the CPU 1 stores a predetermined value in a register SL for storing the data size of the paper to be transmitted as shown in FIG. 4. For example, if the size of the paper to be transmitted is 'A4', the number of pels per line becomes '1728', which is '216' bytes (i.e. 1728 pels/8 bits=216 bytes). At this time, this value of '216' is stored in the register SL. Also, '0' is stored in registers 1DL and 2DL for storing the lengths of the 1-dimension-compressed data and the 2-dimension-compressed data, respectively.

Thereafter, it is determined whether the data of the current line to be compressed is the end of the page to be transmitted. If the current line data is determined not to be the end of the page, the lengths of the 1-dimension-compressed data and the 2-dimension-compressed data are stored in the register 1DL and 2DL, respectively. Then, the values stored in the registers SL, 1DL, and 2DL are compared with one another.

As a result of comparison, if 1DL<2DL or 2DL<SL, and 1DL<2DL, it is determined that the 1-dimension-compressed data is shortest in length and thus the 1-dimension-compressed data is stored in the RAM 5. Also, if 1DL<SL or 2DL<SL, and 1DL≧2DL, it is determined that the 2-dimension-compressed data is shortest in length, and this 2-dimension-compressed data is stored in the RAM 5. Meanwhile, if 1DL≧SL and 2DL≧SL, it is determined that the original data which is not compressed is shortest in length, and this original data is stored in the RAM 5.

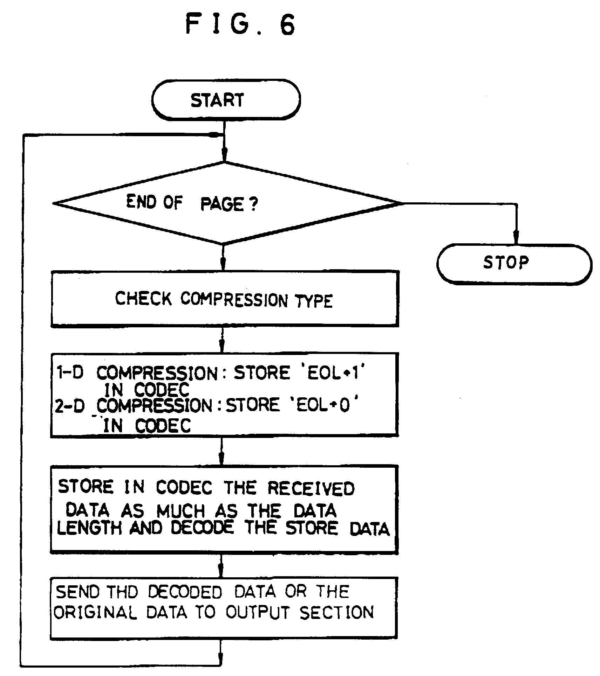

When the data to be transmitted is stored in the RAM 5, it is formatted into a transmission format. The transmission data format is composed of a data length, a compression type, and the data for transmission which are successively arranged for 1 line of data as shown is FIG. 5. After the data transmission, it is again determined whether the current line data is the end of the page to be transmitted. If the current line data is determined to be the end of the page, transmission operation is stopped.

Meanwhile, FIG. 6 shows an algorithm for receiving the data compressed and transmitted as above and decoding the received data in accordance with the data compression and transmission method according to the present invention.

Referring to FIG. 6, it is determined whether the data of the current line is the end of the page to be received, and if the current line data is determined not to be the end of the page, the compression type of the received data is checked. Specifically, if the received data is 1-dimension-compressed, 'EOL+1' is stored in the CODEC section 4, while if the received data is 2-dimension-compressed, 'EOL+0' is stored in the CODEC section 4. The 1-dimension-compressed data or the 2-dimension-compressed data is then inputted to and decoded by the CODEC section 4 according to its data length, and the decoded data is outputted to the output section 9 for printing. If the received data is the original data which is not compressed, this data is directly outputted to the output section 9 for printing. After the printing operation, it is again determined whether the current line data is the end of the page to be received, and if the current line data is determined to be the end of the page, the data decoding and printing operation is stopped.

From the foregoing, it will be apparent that the data compression and transmission method according to the present invention provides the advantages that it can achieve optimum data compression and thereby reduce the data transmission time by compressing the picture signal data in both 1-dimension and 2-dimension and by selectively transmitting one of the 1-dimension-compressed data, the 2-dimension-compressed data, and the original data in accordance with the length of the compressed data.

While the present invention has been described and illustrated herein with reference to the preferred embodiment thereof, it will be understood by those skilled in the art that various changes in form and details may be made therein without departing from the spirit and scope of the invention.

## Claims

1. A method of data compression and transmission for a facsimile, comprising the steps of:
determining and storing a length of original picture signal data to be transmitted;
performing 1-dimensional compression and 2-dimensional compression with respect to the picture signal data, determining and storing each length of the 1-dimension-compressed data and the 2-dimension-compressed data;
comparing the length of the original picture signal data, the 1-dimension-compressed data, and the 2-dimension-compressed data with one another;
selecting one among the original picture signal data, the 1-dimension-compressed data, and the 2-dimension-compressed data which has the shortest length as a result of the comparison, and formatting the selected data into a predetermined format; and
transmitting the formatted data.

2. A method of data compression and transmission as claimed in claim 1, further comprising the step of receiving and decoding the formatted data in accordance with its data format.

3. A method of data compression and transmission as claimed in claim 1, wherein the data format is composed of a data length, a compression type, and the data to be transmitted, which are successively arranged for each line of the data.

4. A method of data compression and transmission as claimed in claim 1, the lengths of the original picture signal data, the 1-dimension-compressed data, and the 2-dimension-compressed data are determined based on the number of pels for each line of the data.

5. A method of data compression and transmission as claimed in claim 1, further comprising the steps of:
determining whether the current line of the data is the end of a page to be transmitted;
stopping transmission of the data if the current line data is determined to be the end of the page to be transmitted; and
returning to the step of performing compression of the picture signal data if the current line data is determined not to be the end of the page to be transmitted.

6. A method of data compression and transmission as claimed in claim 2, wherein the step of receiving and decoding the formatted data comprises the sub-steps of:
determining whether the current line of the received picture signal data is the end of the page to be received;
stopping receiving and decoding of the data if the current line of the received data is determined to be the end of the page to be received;
determining the compression type of the received data if the current line of the received data is determined not to be the end of the page to be received;
printing the received data if the received data is determined to be the original data at the compression type determining step, and returning to the end-of-page determining step;
decoding the received data in accordance with its data length if the received data is determined to be 1-dimension-compressed or 2-dimension-compressed at the compression type determining step; and
printing the decoded data, and returning to the end-of-page determining step.
